# FASCICULE DE BREVET EUROPEEN

(11) **EP 1 964 370 B1**
(45) Date de publication et mention de la délivrance du brevet: **20.03.2013**
(21) Numéro de dépôt: 06847177.0
(22) Date de dépôt: 19.12.2006
(51) Int. Cl.: H04L 29/06, H04L 12/22

(54) **EVALUATION DE L'UTILISATION DE SERVICES ACCESSIBLES DEPUIS UN TERMINAL**
VERWENDUNGSBEWERTUNG EINES DIENSTES, AUF DEN VON EINEM ENDGERÄT AUS ZUGEGRIFFEN WERDEN KANN
TERMINAL-ACCESSIBLE SERVICE USE EVALUATION

(30) Priorité: 19.12.2005 FR 0553933
(43) Date de publication de la demande: 03.09.2008
(73) Titulaire: FRANCE TELECOM, 75015 Paris (FR)
(72) Inventeur: MINODIER, David, F-22300 Lannion (FR); IVANOFF, Gilles, F-22560 Trebeurden (FR)
(74) Mandataire: Regimbeau
(86) Numéro de dépôt international: PCT/FR2006/051387
(87) Numéro de publication internationale: WO 2007/071881

(56) Documents cités:
- WO-A-99/53408
- WO-A-2004/012389
- US-A- 5 708 780

## Description

La présente invention concerne une évaluation de l'utilisation de services accessibles depuis un terminal d'usager dans un réseau de télécommunications. Plus particulièrement, elle a trait à une gestion des services auxquels le terminal d'usager est autorisé à accéder.

Actuellement des protocoles d'authentification incorporent des fonctions d'authentification afin d'autoriser l'accès à des services. Selon le protocole standard 802.1x, lorsqu'un terminal d'usager est authentifié pour accéder à un seul service, un dispositif d'authentification émet un message de contrôle ou un ticket "début de comptage" à destination d'un serveur en charge d'opérations de comptage pour la facturation du service. De même, lorsque le terminal d'usager n'est plus authentifié, le dispositif d'authentification émet un ticket "fin de comptage" à destination dudit serveur. Les informations contenues dans les tickets "début de comptage" et "fin de comptage" comprennent des informations de comptage telles que des dates d'utilisation du service et des volumes de données reçus et transmis par le terminal d'usager pendant la durée d'utilisation du service.

Le document WO 2004/079542 décrit un système pour évaluer l'utilisation de services accessibles depuis un terminal d'usager, à travers un réseau de télécommunications. Plusieurs identificateurs de services sont transmis à un dispositif de contrôle pour autoriser le terminal d'usager à accéder aux services.

Un objectif de l'invention est de suivre l'utilisation de services fournis à un terminal d'usager, lorsqu'un serveur d'authentification autorise au terminal d'usager l'accès aux services après une unique authentification du terminal d'usager, afin d'améliorer la facturation de ces services.

Un procédé selon l'invention pour évaluer l'utilisation de services accessibles depuis un terminal d'usager à travers un réseau de télécommunications comporte des étapes selon la revendication 1

Après une seule authentification, l'usager a accès aux services auxquels il est abonné sans être obligé de les utiliser. Les messages de contrôle permettent de connaître les services demandés par l'usager et la quantité de ressources requises. Les messages de contrôle donnent des informations sur les services utilisés et sont centralisés dans le serveur de gestion, facilitant ainsi la facturation des services utilisés. Des administrateurs de réseau peuvent utiliser les informations relatives aux messages de contrôle pour tracer l'activité d'un usager pour un audit de sécurité ou pour des statistiques.

Pour chaque service utilisé sont générés des messages de contrôle, ce qui rend plus efficace une gestion des coûts d'exploitation des services et plus précise une facturation de l'utilisation des services par l'usager. Par ailleurs, cette facturation plus précise est utile à l'usager pour mieux adapter des services à ses besoins, sans recourir par exemple à des forfaits qui ne reflètent pas l'utilisation réelle des services.

Selon une autre caractéristique de l'invention, le procédé peut comprendre en outre dans le dispositif de contrôle une transmission périodique d'un message de contrôle intermédiaire comprenant l'identificateur de service et le compte de trafic pour chaque session de contrôle de service.

Dans le cas d'une connexion de longue durée du type xDSL (Digital Subscriber Line) entre le terminal d'usager et le dispositif de contrôle, les messages intermédiaires sont nécessaires pour la facturation d'un ou plusieurs services selon une durée d'utilisation plus courte que la durée de connexion.

L'invention concerne également un dispositif pour évaluer l'utilisation de services accessibles depuis un terminal d'usager à travers un réseau de télécommunications, et un serveur d'authentification apte à authentifier l'usager du terminal et à transmettre des identificateurs des services audit dispositif de contrôle pour autoriser le terminal d'usager à accéder aux services. Le dispositif est caractérisé selon la revendication 9.

Enfin, l'invention se rapporte à un programme d'ordinateur comprenant des instructions de programme pour la mise en oeuvre d'un procédé selon l'invention lorsque lesdites instructions sont exécutées par un processeur.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système de télécommunications pour évaluer l'utilisation de services accessibles depuis un terminal d'usager selon l'invention ; et
- la figure 2 est un algorithme d'un procédé d'évaluation de l'utilisation de services accessibles depuis un terminal d'usager selon l'invention.

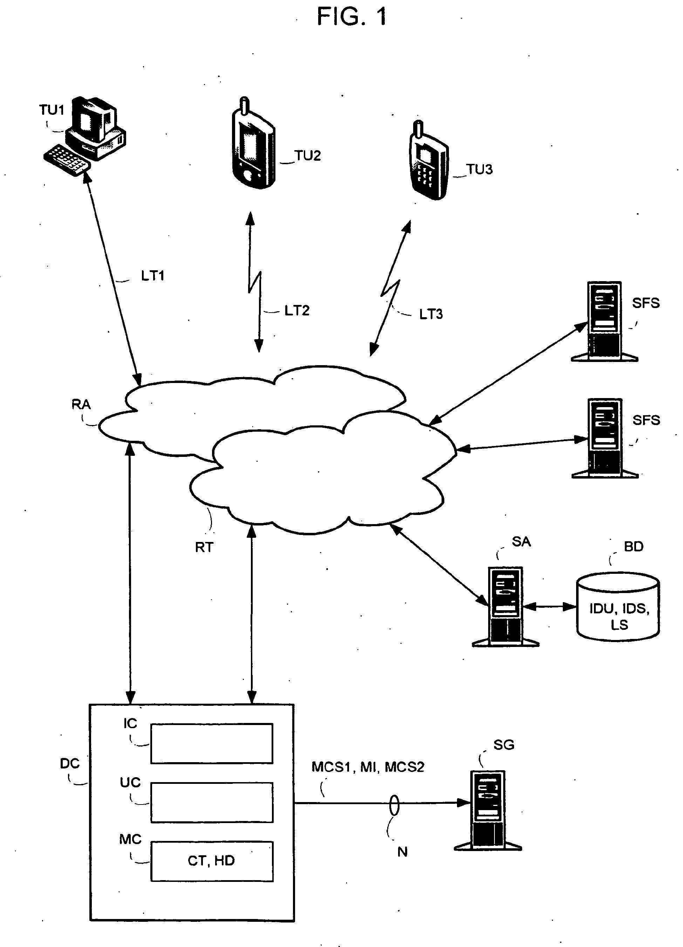

En référence à la **figure 1****,** le système de télécommunications comprend au moins un terminal d'usager tel qu'un terminal d'usager TU1, TU2 ou TU3, un serveur d'authentification SA, une base de données BD en relation avec le serveur d'authentification SA, un dispositif de contrôle DC, un serveur de gestion SG et au moins un serveur de fournisseur de service SFS.

Le dispositif de contrôle DC communique avec le serveur d'authentification SA à travers un réseau de télécommunications RT du type internet. Le dispositif de contrôle communique avec le serveur de gestion SG par un réseau local ou par des lignes spécialisées. Dans une variante, le dispositif de contrôle communique avec le serveur de gestion par un réseau local ou par des lignes spécialisées à travers le réseau RT. Dans une autre variante, le serveur d'authentification SA et le serveur de gestion SG sont combinés en ou intégrés dans un unique serveur qui est en relation avec ou qui inclut la base de données BD.

**Les terminaux d'usager** TU1, TU2 et TU3 communiquent avec le dispositif de contrôle DC à travers des réseaux d'accès respectifs RA. Selon la réalisation illustrée à la figure 1, les terminaux sont reliés à des réseaux d'accès respectifs RA par des liaisons respectives LT1, LT2 et LT3.

Un terminal d'usager TU1 est par exemple un ordinateur personnel relié directement par modem à la liaison LT1 de type xDSL (Digital Subscriber Line) ou RNIS (Réseau Numérique à Intégration de Services) reliée au réseau d'accès RA correspondant. La liaison LT1 peut être également une liaison filaire du type câble série, ou cordon de raccordement de type Ethernet, ou bus USB (Universal Serial Bus), ou encore fibre optique.

Selon un autre exemple, un terminal d'usager TU2 comprend un dispositif ou objet électronique de télécommunications qui est personnel à l'usager et qui peut être un assistant numérique personnel communicant PDA, ou un téléphone intelligent (SmartPhone), pouvant être relié par la liaison radio LT2 à une borne d'accès d'un réseau public sans fil de faible portée du type WLAN (Wireless LAN) ou conforme à l'une des normes 802.1x, ou de moyenne portée selon le protocole WIMAX (World wide Interoperability Microwave Access).

Selon encore un autre exemple, un terminal d'usager TU3 est un terminal de radiocommunications cellulaire mobile, la liaison LT3 est un canal de radiocommunication, et le réseau d'accès respectif RA comprend le réseau fixe d'un réseau de radiocommunications, par exemple de type UMTS (Universal Mobile Telecommunications System).

Plus généralement, le terminal TU1, TU2, TU3 peut être tout autre terminal domestique communicant portable ou non tel qu'une console de jeux vidéo, ou un récepteur de télévision intelligent coopérant avec une télécommande à afficheur, ou un clavier alphanumérique servant également de souris à travers une liaison infrarouge.

Selon un autre exemple, le réseau d'accès RA comprend un réseau de raccordement de plusieurs terminaux d'usager.

Les terminaux d'usager TU1, TU2 et TU3 et les réseaux d'accès RA ne sont pas limités aux exemples ci-dessus et peuvent être constitués par d'autres terminaux et réseaux d'accès connus. Les terminaux d'usager sont désignés indifféremment par TU dans la suite de la description.

Le **dispositif de contrôle DC** comprend notamment une interface de communication IC, une unité centrale de traitement UC et un module d'évaluation ME comprenant des compteurs de trafic en nombre suffisant pour être assignés respectivement aux usagers et aux services par usager.

Lorsque le terminal d'usager TU est relié au réseau RA par une liaison de type xDSL, le dispositif de contrôle DC est un multiplexeur numérique de lignes de clients DSLAM (Digital Subscriber Line Access Multiplexor). A titre d'exemples non limitatifs, le dispositif de contrôle peut être un commutateur Ethernet, un routeur IP (Internet Protocol) ou une borne d'accès sans fil, adapté au réseau d'accès RA relatif au terminal d'usager.

L'interface de communication IC comprend un port physique dédié aux communications point à point à travers le réseau d'accès respectif RA entre le dispositif de contrôle DC et le terminal d'usager TU connecté à ce port. Par ailleurs, l'interface de communication IC assure une fonction de passerelle entre le réseau d'accès RA et le réseau de télécommunications RT par le transport de données échangées entre le terminal d'usager et un ou plusieurs serveurs de fournisseurs de service SFS. Selon le standard 802.1x, le port physique est scindé en deux ports logiques, connectés en parallèle sur le port physique. Le premier port logique, dit "contrôlé", est à un état "bloqué" ou "débloqué". A l'état débloqué, le premier port logique autorise une communication entre un terminal d'usager TU et un ou plusieurs serveurs de fournisseur de service SFS. Le premier port logique est à l'état bloqué tant que le terminal d'usager TU n'est pas authentifié et donc n'est pas autorisé à accéder à au moins un service offert par le fournisseur de service SFS. Le deuxième port logique, qui est dit "non contrôlé", reste toujours accessible, et gère uniquement des trames spécifiques au protocole 802.1x pour l'authentification d'un terminal d'usager TU par le serveur d'authentification SA.

Une fois le terminal d'usager TU authentifié par le serveur d'authentification SA, le premier port logique est débloqué et le terminal d'usager peut communiquer avec un ou plusieurs serveurs de fournisseurs de service SFS.

La communication entre le terminal d'usager TU et le dispositif de contrôle DC est fondée sur le protocole EAP (Extensible Authentication Protocol). Des paquets EAP sont encapsulés et transportés dans des trames Ethernet spécifiques EAPOL (EAP Over Lan). La technique de communication au niveau de la couche liaison repose donc sur des paquets Ethernet.

Le serveur d'authentification SA et le dispositif de contrôle DC communiquent par des paquets EAP dans un format spécifique au serveur d'authentification SA, sans modification du contenu des paquets EAP par le dispositif de contrôle qui effectue en outre une lecture des informations contenues dans les paquets EAPOL afin de bloquer ou débloquer le port contrôlé. Plus précisément, l'agencement des différentes couches pour l'échange de paquets entre le dispositif de contrôle DC et le serveur d'authentification SA repose sur le protocole RADIUS (Remote Authentication Dial In User Service) dont la couche de transport s'appuie soit sur le protocole de transport UDP (User Datagram Protocol), soit sur le protocole de transport TCP (Transport Control Protocol) pour transmettre des paquets IP.

Avant la connexion du terminal d'usager TU au port physique de l'interface de communication IC du dispositif de contrôle, le port contrôlé de ce dernier est bloqué, et seul le port non contrôlé est accessible. Lors de la connexion, le terminal d'usager reçoit un paquet EAP provenant du serveur d'authentification SA l'invitant à s'authentifier. Le terminal d'usager transmet une réponse au port non contrôlé qui retransmet la réponse au serveur d'authentification SA. Une communication est alors établie entre le terminal d'usager et le serveur d'authentification par l'intermédiaire du relais offert par le port non contrôlé de l'interface de communication du dispositif de contrôle afin d'authentifier le terminal d'usager.

Selon la technique d'authentification utilisée, le terminal d'usager TU doit transmettre au serveur d'authentification SA par exemple un identificateur et un mot de passe ou un jeu de clés ou de certificats.

Le module d'évaluation ME génère des messages de contrôle de service comprenant des données concernant l'utilisation d'un service relatif à un terminal d'usager. Lesdites données sont par exemple des dates d'utilisation d'un service, le volume de données échangées entre le terminal d'usager et un serveur de fournisseur de service, un identificateur de service IDS et un identificateur d'usager IDU. Les messages de contrôle sont nécessaires à l'opérateur gérant le serveur de gestion SG pour la facturation des services proposés.

Un premier message de contrôle de service MCS1 est généré pour chaque service accessible par un usager, c'est-à-dire un service dont un abonnement a été souscrit par l'usager, lorsqu'une communication entre le terminal TU de l'usager et un serveur de fournisseur de service SFS dispensant le service est établie.

Un deuxième message de contrôle de service MCS2 est généré pour chaque service accessible par l'usager lorsqu'une communication entre le terminal TU de l'usager et le serveur SFS dispensant le service est terminée, par exemple lorsque le terminal d'usager TU se déconnecte du dispositif de contrôle DC.

Par ailleurs, un message de contrôle intermédiaire MI peut être généré régulièrement suite à des ré-authentifications périodiques du terminal d'usager pendant la communication entre ce dernier et un serveur de fournisseur de service SFS.

Ainsi, lorsque l'usager du terminal TU accède à N services, avec N ≥ 1, N premiers messages de contrôle de service MCS1 et N deuxièmes messages de contrôle de service MCS2 sont générés et K x N messages de contrôle intermédiaires MI sont générés, avec K ≥ 1.

Le **serveur d'authentification SA** authentifie les terminaux d'usager et leur autorise l'accès à des services. Le serveur d'authentification est par exemple un serveur conforme au protocole RADIUS. Selon d'autres exemples, le serveur d'authentification SA est conforme au protocole "Diameter" ou TACACS (Terminal Access Controller Access Control System).

La base de données BD est liée au serveur d'authentification SA, c'est-à-dire elle est soit intégrée dans le serveur d'authentification SA, soit incorporée dans un serveur de gestion de base de données et reliée au serveur d'authentification par une liaison locale ou distante. La base de données BD comprend notamment des informations nécessaires à l'authentification et l'autorisation pour des terminaux d'usager telles que des identificateurs d'usager IDU, des identificateurs de service IDS et des listes LS de services autorisés auxquels les usagers sont abonnés.

L'identificateur d'usager IDU est indépendant du terminal TU utilisé par l'usager et identifie l'usager du terminal pendant une session de communication entre le terminal avec un serveur de fournisseur de service par exemple. Pour attribuer un identificateur d'usager IDU, l'usager doit préalablement s'abonner ou s'inscrire auprès du serveur d'authentification SA, afin d'obtenir un identifiant et un mot de passe associés à l'identificateur d'usager. Par exemple, l'identifiant et le mot de passe sont saisis au clavier du terminal d'usager ou prononcés devant le terminal par l'usager.

Les **serveurs de fournisseurs de service SFS** sont gérés respectivement par des fournisseurs de service proposant des services tels que l'accès à internet, la visioconférence ou la téléphonie sur IP, et passant des accords de reconnaissance mutuelle avec un serveur de gestion SG afin d'utiliser les données mémorisées dans le serveur de gestion SG pour la facturation des services proposés. Afin de ne pas surcharger la figure 1, on a représenté seulement deux serveurs de fournisseurs de service qui sont désignés indifféremment par SFS. Chaque serveur SFS est relié au dispositif de contrôle DC via le réseau RT.

L'invention s'applique à divers objets, qu'ils soient des services proprement dits ou qu'ils soient des produits obtenus indirectement par des services. Une réalisation préférée du procédé d'évaluation d'utilisation de services selon l'invention est décrite ci-après pour évaluer l'utilisation de services accessibles depuis un terminal d'usager TU à travers un réseau de télécommunications RT. Il sera entendu que le procédé selon l'invention est aussi applicable pour évaluer l'utilisation de services accessibles depuis des terminaux d'usager TU à travers un réseau de télécommunications RT.

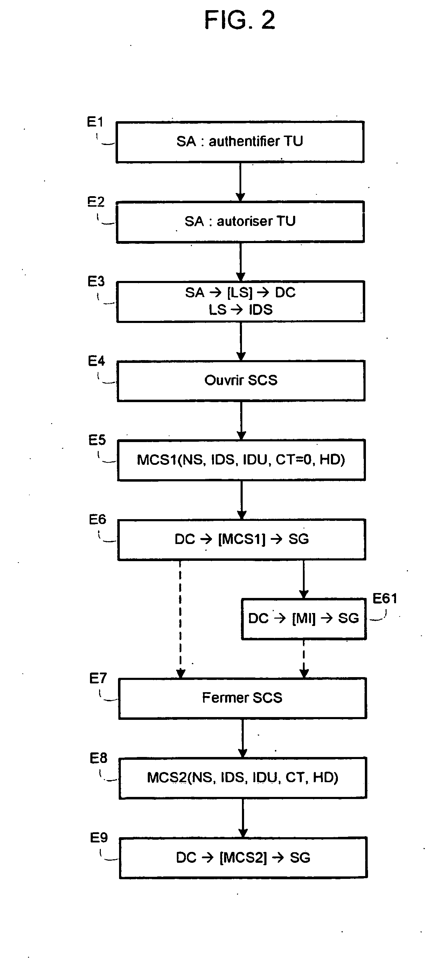

En référence à la **figure 2****,** le procédé d'évaluation de l'utilisation de services accessibles depuis un terminal d'usager selon la réalisation préférée de l'invention comprend des étapes connues E1 et E2 respectivement d'authentification et d'autorisation et des étapes E3 à E9 exécutées automatiquement dans le dispositif de contrôle DC.

Initialement, l'usager d'un terminal TU, qui a souscrit un abonnement à plusieurs services, souhaite accéder à au moins l'un de ces services.

A l'étape E1, le terminal d'usager TU se connecte à l'interface de communication IC du dispositif de contrôle DC afin de communiquer avec le serveur d'authentification SA, comme décrit précédemment. Le serveur d'authentification SA authentifie l'usager du terminal TU de manière connue, par exemple en analysant un identifiant et un mot de passe associés transmis par le terminal d'usager.

A l'étape E2 après authentification de l'usager, le serveur d'authentification SA consulte dans la base de données BD une liste de services LS en correspondance avec l'identificateur IDU de l'usager du terminal TU associé à l'identifiant et au mot de passe de l'usager authentifié afin d'autoriser l'accès aux services auxquels l'usager est abonné. Le serveur d'authentification SA forme une réponse d'autorisation comprenant notamment la liste de services autorisés LS, des identificateurs de service IDS et des attributs relatifs à l'accès aux services autorisés.

A l'étape E3, le serveur d'authentification SA transmet la réponse d'autorisation incluant la liste de services LS au dispositif de contrôle DC qui identifie les services inclus dans la liste LS. Par exemple, l'unité centrale de traitement UC du dispositif de contrôle DC lit les identificateurs de service reçus IDS déterminant respectivement des adresses de serveurs de fournisseur de service SFS afin de débloquer le premier port logique de l'interface de communication IC et commander une interconnexion du terminal d'usager TU et de chacun des serveurs de fournisseur de service adressés, à travers le dispositif de contrôle. Cette interconnexion dans l'interface de communication IC consiste en l'établissement d'une communication entre le dispositif de contrôle et chacun des serveurs de fournisseur de service adressés et l'aboutement de la communication entre le terminal d'usager et le dispositif de contrôle à la communication entre le dispositif de contrôle et chacun des serveurs de fournisseur de service adressés.

A l'étape E4, le module d'évaluation ME ouvre des sessions de contrôle de service SCS respectivement pour les services identifiés. La session de contrôle d'un service est identifiée par un numéro de session NS fixé en fonction notamment de l'identificateur de service IDS et de l'identificateur d'usager IDU et correspond à la session de communication relative au service entre le terminal d'usager TU et un serveur de fournisseur de service SFS.

A l'étape E5, le module d'évaluation ME génère un premier message de contrôle de service MCS1 pour chaque service identifié et par conséquent pour chaque session de contrôle de service SCS. Le premier message de contrôle MCS1 comprend le numéro de session NS, l'identificateur de service IDS et l'identificateur d'usager IDU.

En variante, le premier message de contrôle MCS1 comprend en outre une adresse du dispositif de contrôle DC qui peut être analogue à une adresse IP ou une adresse MAC (Medium Access Control) et le compte CT d'un compteur de trafic qui évalue le trafic de données échangées entre le terminal d'usager TU et le serveur de fournisseur de service SFS via le dispositif de contrôle DC. Le compte de trafic CT, inclus dans le premier message de contrôle de service MCS1, correspond par exemple à des valeurs données en sortie du compteur telles que le nombre d'octets transmis à destination et/ou en provenance du terminal d'usager TU pour un service. Dans cet exemple pour un premier message de contrôle de service MCS1, le compte de trafic est mis à zéro.

Dans une autre variante, pour la session de contrôle SCS de chaque service, le module d'évaluation ME active simultanément un horodateur avec le compteur de trafic relatif au service et le premier message de contrôle MCS1 relatif au service inclut des données d'horodatage HD (date, heure et minutes) fournies par l'horodateur. Les données d'horodatage servent à estimer la durée d'utilisation du service et seront mémorisées avec les comptes de trafic dans le serveur de gestion SG.

A l'étape E6, le module d'évaluation ME transmet au serveur de gestion SG les premiers messages de contrôle de service générés MCS1 relatifs à l'ouverture des sessions de contrôle de service SCS respectives.

En variante, à chaque expiration d'une période cyclique prédéterminée, le module d'évaluation ME génère un message de contrôle intermédiaire MI pour chaque session de contrôle de service ouverte SCS après une ré-authentification du terminal d'usager TU et le transmet au serveur de gestion SG à une étape E61. Le contenu du message de contrôle intermédiaire MI est similaire à celui du premier message de contrôle de service MCS1, comprenant notamment le même numéro de session NS. Par contre, le compte de trafic CT a une valeur non nulle.

A une étape respective E7 de chaque service identifié, le module d'évaluation ME ferme la session de contrôle de service SCS pour le service identifié, par exemple lorsque la communication entre le terminal d'usager et le serveur de fournisseur de service SFS est terminée.

En variante, le module d'évaluation ME ferme simultanément toutes les sessions de contrôle de service SCS pour les services identifiés respectifs, par exemple lorsque le terminal d'usager TU se déconnecte du dispositif de contrôle DC.

A une étape respective E8 de chaque service identifié, le module d'évaluation ME génère un deuxième message de contrôle de service MCS2 pour la session de contrôle fermée SCS du service identifié. Le contenu du deuxième message de contrôle MCS2 est similaire à celui du premier message de contrôle de service MCS1, et comprend notamment le même numéro de session NS qui identifie la session de contrôle de service SCS, ainsi que le compte de trafic CT évalué par le compteur assigné au service et les données d'horodatage HD.

A l'étape E9 après la dernière fermeture de la session de contrôle de l'un des services identifiés pour l'usager du terminal TU, le module d'évaluation ME transmet au serveur de gestion SG les deuxièmes messages de contrôle de service générés MCS2 relatifs respectivement aux sessions de contrôle de service fermées SCS.

Dans le serveur de gestion SG, le compte de trafic CT extrait d'un message reçu MCS2 indique le volume de données reçu et/ou transmis par le terminal d'usager TU pendant la durée d'utilisation du service. En outre dans le serveur de gestion SG, les données d'horodatage HD à la fermeture de la session extraites du message reçu MCS2 sont comparées aux données d'horodatage HD extraites d'un message antérieur MCS1 et mémorisées à l'ouverture de la session pour en déduire la durée effective d'utilisation du service relatif à la session de contrôle de service SCS par l'usager du terminal TU..

A l'issue de l'étape E9, le serveur de gestion SG mémorise tous les messages de contrôle MCS1, MI et MCS2 dans une base de données. En réponse à chaque message de contrôle reçu incluant l'identificateur IDS d'un service respectif, le serveur de gestion SG cumule le compte de trafic reçu avec un compte de trafic total du service cumulé depuis une dernière facture et cumule la durée d'utilisation du service avec une durée d'utilisation totale du service cumulée depuis la dernière facture afin de les archiver et d'établir une prochaine facture de service pour l'usager du terminal TU. Par conséquent, le serveur de gestion SG mémorise particulièrement le compte de trafic CT et les données d'horodatage HD relatifs à chacun des messages de contrôle reçus.

L'invention décrite ici concerne un procédé et un dispositif informatique pour évaluer l'utilisation de services accessibles depuis un terminal d'usager à travers un réseau de télécommunications, un serveur d'authentification authentifiant l'usager du terminal et transmettant des identificateurs des services au dispositif de contrôle pour autoriser le terminal d'usager à accéder aux services. Selon une implémentation préférée, les étapes du procédé de l'invention sont déterminées par les instructions d'un programme d'ordinateur incorporé dans un dispositif informatique tel que le dispositif de contrôle DC. Le programme comporte des instructions de programme qui, lorsque ledit programme est chargé et exécuté dans le dispositif informatique dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement sur lequel est stocké le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour évaluer l'utilisation de services accessibles depuis un terminal d'usager (TU) à travers un réseau de télécommunications (RT), comportant une étape d'authentification de l'usager (TU) du terminal auprès d'un serveur d'authentification (SA),
- l'étape d'authentification est réalisée à travers le réseau de télécommunications (RT), **caractérisé en ce que**
- il comprend une étape de transmission de plusieurs identificateurs (IDS) de service, déterminant respectivement des adresses de serveurs de fournisseur de service (SFS), à travers le réseau de télécommunications (RT), à un dispositif de contrôle (DC) pour autoriser (E2) le terminal d'usager à accéder aux services, la réception des identificateurs de services (IDS) déclenche une ouverture (E4) d'une session de contrôle (SCS) par service accessible depuis le terminal d'usager afin d'évaluer les trafics de données échangées entre le terminal d'usager (TU) et les serveurs de service (SFS) dispensant les services accessibles via le dispositif de contrôle (DC) en des comptes de trafic (CT), et il comporte une étape de transmission (E8) à un serveur de gestion (SG) couplé au dispositif de contrôle (DC) des messages de contrôle de service (MCS2) incluant chacun un identificateur de service (IDS) et un compte de trafic (CT) relatifs à un service accessible après la fermeture (E7) de sessions de contrôle (SCS) des services.

2. Procédé conforme à la revendication 1, comprenant en outre, dans lé dispositif de contrôle (DC), après l'ouverture des sessions de contrôle (SCS) des services, une mise à zéro (E5) des comptes de trafic (CT) et une transmission au serveur de gestion (SG) d'autres messages de contrôle de service (MCS1) incluant chacun un identificateur de service (IDS).

3. Procédé conforme à la revendication 1 ou 2, comprenant une cumulation du compte de trafic reçu (CT) avec un compte de trafic total dans le serveur de gestion (SG) en réponse à chaque message de contrôle reçu incluant l'identificateur (IDS) d'un service respectif.

4. Procédé conforme à l'une quelconque des revendications 1 à 3, selon lequel les messages de contrôle (MCS1, MCS2) comprennent en outre des données d'horodatage (HD).

5. Procédé conforme à l'une quelconque des revendications 1 à 4, comprenant en outre dans le dispositif de contrôle (DC) une transmission périodique (E61) d'un message de contrôle intermédiaire (MI) comprenant l'identificateur de service (IDS) et le compte de trafic (CT) pour chaque session de contrôle de service (SCS).

6. Procédé conforme à l'une quelconque des revendications 1 à 5, selon lequel le serveur d'authentification (SA) et le serveur de gestion (SG) sont confondus.

7. Dispositif (DC) pour évaluer l'utilisation de services accessibles depuis un terminal d'usager (TU) à travers un réseau de télécommunications (RT), un serveur de gestion (SG) couplé au dispositif de contrôle (DC) et un serveur d'authentification (SA) apte à authentifier l'usager du terminal.
- le serveur d'authentification communique avec le dispositif de contrôle (DC) à travers le réseau de télécommunication (RT) **caractérisé en ce qu'**il est apte à transmettre des identificateurs (IDS) des services, déterminant respectivement des adresses de serveurs de fournisseur service (SFS) à travers le réseau de télécommunications (RT), audit dispositif de contrôle (DC) pour autoriser le terminal d'usager à accéder aux services,le dispositif de contrôle (DC) comprend des moyens aptes à déclencher, sur réception des identificateurs de services (IDS), une ouverture (E4) d'une session de contrôle (SCS) par service accessible depuis le terminal d'usager afin d'évaluer les trafics de données échangées entre le terminal d'usager (TU) et les serveurs de service (SFS) dispensant les services accessibles via le dispositif de contrôle (DC) en des comptes de trafic (CT), et
des moyens de transmission (E8) au serveur de gestion (SG) des messages de contrôle de service (MCS2) incluant chacun un identificateur de service (IDS) et un compte de trafic (CT) relatifs à un service accessible après la fermeture (E7) de sessions de contrôle (SCS) des services.

8. Programme d'ordinateur comprenant des instructions de programme pour la mise en oeuvre d'un procédé selon l'une quelconque des revendications 1 à 6 lorsque lesdites instructions sont exécutées par un processeur.

9. Support d'enregistrement sur lequel est stocké un programme d'ordinateur conforme à la revendication 8.

## Claims

1. Method for evaluating the use of services that can be accessed from a user terminal (TU) through a telecommunications network (RT), comprising a step of authenticating the user (TU) of the terminal with an authentication server (SA),
- the authentication step is carried out through the telecommunications network (RT), **characterized in that**
- it comprises a step of transmitting several service identifiers (IDS), determining respectively addresses of service-provider servers (SFS), through the telecommunications network (RT), to a control device (DC) in order to authorize (E2) the user terminal to access the services, the receipt of the service identifiers (IDS) initiates an opening (E4) of a control session (SCS) per service accessible from the user terminal in order to evaluate the data traffic interchanged between the user terminal (TU) and the service servers (SFS) dispensing the services that can be accessed via the control device (DC) in traffic counts (CT), and it comprises a step of transmitting (E8) to a management server (SG) coupled to the control device (DC) service-control messages (MCS2) each including a service identifier (IDS) and a traffic count (CT) relating to a service that can be accessed after the closure (E7) of the service-control sessions (SCS).

2. Method according to Claim 1, also comprising, in the control device (DC), after the opening of the service-control sessions (SCS), a resetting (E5) of the traffic counts (CT) and a transmission to the management server (SG) of other service-control messages (MCS1) each including a service identifier (IDS).

3. Method according to Claim 1 or 2, comprising an accumulation of the traffic count (CT) received with a total traffic count in the management server (SG) in response to each received control message including the identifier (IDS) of a respective service.

4. Method according to any one of Claims 1 to 3, according to which the control messages (MCS1, MCS2) also comprise time-stamping data (HD).

5. Method according to any one of Claims 1 to 4, also comprising, in the control device (DC) a period transmission (E61) of an intermediate control message (MI) comprising the service identifier (IDS) and the traffic count (CT) for each service-control session (SCS).

6. Method according to any one of Claims 1 to 5, according to which the authentication server (SA) and the management server (SG) are indistinguishable.

7. Device (DC) for evaluating the use of services that can be accessed from a user terminal (TU) through a telecommunications network (RT), a management server (SG) coupled to the control device (DC) and an authentication server (SA) capable of authenticating the user of the terminal;
- the authentication server communicates with the control device (DC) through the telecommunications network (RT), **characterized in that** it is capable of transmitting identifiers (IDS) of the services, determining respectively addresses of service-provider servers (SFS) through the telecommunications network (RT) to said control device (DC) in order to authorize the user terminal to access the services, the control device (DC) comprises means capable of initiating, on receipt of the service identifiers (IDS), an opening (E4) of a control session (SCS) per service that can be accessed from the user terminal in order to evaluate the data traffic interchanged between the user terminal (TU) and the service servers (SFS) dispensing the services that can be accessed via the control device (DC) in traffic counts (CT) and
transmission means (E8) for transmitting to the management server (SG) service-control messages (MCS2) each including a service identifier (IDS) and a traffic count (CT) relating to an accessible service after the closure (E7) of service-control sessions (SCS).

8. Computer program comprising program instructions for the implementation of a method according to any one of Claims 1 to 6, when said instructions are executed by a processor.

9. Recording medium on which a computer program according to Claim 8 is stored.

## Patentansprüche

1. Verfahren zum Bewerten der Verwendung von Diensten, auf die von einem Teilnehmerendgerät (TU) über ein Fernmeldenetz (RT) zugegriffen werden kann, das einen Schritt des Authentifizierens des Teilnehmers (TU) des Endgeräts bei einem Authentifizierungsserver (SA) aufweist,
- wobei der Schritt des Authentifizierens über das Fernmeldenetz (RT) ausgeführt wird, **dadurch gekennzeichnet, dass**
- es einen Schritt des Sendens mehrerer Dienstkennungen (IDS), die jeweils Dienstanbieter-Serveradressen (SFS) bestimmen, über das Fernmeldenetz (RT) an eine Steuereinrichtung (DC) aufweist, um das Teilnehmerendgerät zu berechtigen (E2), auf die Dienste zuzugreifen, wobei der Empfang der Dienstkennungen (IDS) eine Eröffnung (E4) einer Steuersitzung (SCS) pro Dienst auslöst, auf den vom Teilnehmerendgerät zugegriffen werden kann, um den Verkehr der Daten, die zwischen dem Teilnehmerendgerät (TU) und den Dienstservern (SFS) ausgetauscht werden, die die Dienste verteilen, auf die über die Steuereinrichtung (DC) zugegriffen werden kann, in Verkehrszählungen (CT) zu bewerten, und es einen Schritt des Sendens (E8) von Dienststeuernachrichten (MCS2), die jeweils eine Dienstkennung (IDS) und eine Verkehrszählung (CT) aufweisen, die einen Dienst betreffen, auf den nach der Schließung (E7) von Steuersitzungen (SCS) der Dienste zugegriffen werden kann, an einen Verwaltungsserver (SG) aufweist, der an die Steuereinrichtung (DC) gekoppelt ist.

2. Verfahren nach Anspruch 1, das ferner in der Steuereinrichtung (DC) nach der Eröffnung der Steuersitzungen (SCS) der Dienste, eine Rückstellung (E5) der Verkehrszählungen (CT) und eine Sendung anderer Dienststeuernachrichten (MCS1), die jeweils eine Dienstkennung (IDS) aufweisen, an den Verwaltungsserver (SG) aufweist.

3. Verfahren nach Anspruch 1 oder 2, das als Reaktion auf jede empfangene Steuernachricht, die die Kennung (IDS) eines entsprechenden Dienstes aufweist, eine Kumulation der Zählung des empfangenen Verkehrs (CT) mit einer Zählung des Gesamtverkehrs im Verwaltungsserver (SG) aufweist.

4. Verfahren nach einem der Ansprüche 1 bis 3, wobei die Steuernachrichten (MCS1, MCS2) ferner Zeitstempelinformationen (HD) aufweisen.

5. Verfahren nach einem der Ansprüche 1 bis 4, das ferner in der Steuereinrichtung (DC) ein periodisches Senden (E61) einer Zwischensteuernachricht (MI) aufweist, die die Dienstkennung (IDS) und die Verkehrszählung (CT) für jede Dienststeuersitzung (SCS) aufweist.

6. Verfahren nach einem der Ansprüche 1 bis 5, wobei der Authentifizierungsserver (SA) und der Verwaltungsserver (SG) vereinigt sind.

7. Vorrichtung (DC) zum Bewerten der Verwendung von Diensten, auf die von einem Teilnehmerendgerät (TU) über ein Fernmeldenetz (RT), einen Verwaltungsserver (SG), der an die Steuereinrichtung (DC) gekoppelt ist, und einen Authentifizierungsserver (SA) zugegriffen werden kann, der geeignet ist, den Teilnehmer des Endgeräts zu authentifizieren,
- wobei der Authentifizierungsserver über das Fernmeldenetz (RT) mit der Steuereinrichtung (DC) kommuniziert, **dadurch gekennzeichnet, dass** er geeignet ist, über das Fernmeldenetz (RT) Kennungen (IDS) der Dienste, die jeweils Dienstanbieter-Serveradressen (SFS) bestimmen, an die Steuereinrichtung (DC) zu senden, um das Teilnehmerendgerät zu berechtigen, auf die Dienste zuzugreifen, wobei die Steuereinrichtung (DC) Mittel aufweist, die geeignet sind, beim Empfang der Dienstkennungen (IDS) pro Dienst, auf den vom Teilnehmerendgerät zugegriffen werden kann, eine Eröffnung (E4) einer Steuersitzung (SCS) auszulösen, um den Verkehr der Daten, die zwischen dem Teilnehmerendgerät (TU) und den Dienstservern (SFS) ausgetauscht werden, die die Dienste vermitteln, auf die über die Steuereinrichtung (DC) zugegriffen werden kann, in Verkehrszählungen (CT) zu bewerten, und
Mittel zum Senden (E8) der Dienststeuernachrichten (MCS2), die jeweils eine Dienstkennung (IDS) und eine Verkehrszählung (CT) aufweisen, die einen Dienst betreffen, auf den nach der Schließung (E7) von Steuersitzungen (SCS) der Dienste zugegriffen werden kann, an den Verwaltungsserver (SG).

8. Computerprogramm, das Programmbefehle für die Durchführung eines Verfahrens nach einem der Ansprüche 1 bis 6 aufweist, wenn die Befehle durch einen Prozessor ausgeführt werden.

9. Aufzeichnungsträger, auf dem ein Computerprogramm nach Anspruch 8 gespeichert ist.
